Europäisches Patentamt

European Patent Office

Office européen des brevets

(19)

(11) Numéro de publication: **0 038 768**
**B1**

(12) **FASCICULE DE BREVET EUROPEEN**

(45) Date de publication du fascicule du brevet:
**31.08.83**

(51) Int. Cl.³: **F 16 K 35/00,** F 16 L 37/28

(21) Numéro de dépôt: **81420061.4**

(22) Date de dépôt: **22.04.81**

(54) Verrouillage pour raccord-vanne.

(30) Priorité: **23.04.80 FR 8009563**

(43) Date de publication de la demande:
**28.10.81 Bulletin 81/43**

(45) Mention de la délivrance du brevet:
**31.08.83 Bulletin 83/35**

(84) Etats contractants désignés·
**CH DE GB LI SE**

(56) Documents cités:
**FR-A-2 082 006**
**GB-A-844 258**
**GB-A-2 004 031**

(73) Titulaire: **S.A. DES ETABLISSEMENTS STAUBLI
(France), F-74210 Faverges (FR)**

(72) Inventeur: **Truchet, Gaston, 4 Impasse des Mésanges,
F-74210 Faverges (FR)**

(74) Mandataire: **Monnier, Guy et al, Cabinet
Monnier 142-150 Cours Lafayette, F-69003 Lyon (FR)**

Verrouillage pour raccord-vanne

La présente invention a trait aux raccords-vannes de sécurité, c'est-à-dire aux dispositifs de raccordement dans lesquels l'un des deux éléments emmanchables renferme un organe réglable d'obturation susceptible d'être manœuvré de l'extérieur par l'utilisateur.

On sait que dans les dispositifs de ce genre l'organe d'obturation est attelé au mécanisme qui assure le verrouillage des deux éléments emmanchables de façon à ce que ceux-ci ne puissent être dissociés tant que l'organe précité n'a pas été amené en position de fermeture et que l'espace intérieur de la canalisation associée à l'élément qui ne comporte pas cet organe n'a pas été mis en communication avec l'atmosphère extérieure à travers un évent de fuite.

Dans certains dispositifs connus l'organe d'obturation est constitué par un boisseau tournant manœuvré angulairement à l'aide d'une bague cylindrique montée à coulissement axial sur le corps de l'élément femelle. Le verrouillage des deux éléments emmanchables est opéré au moyen d'une série de billes commandées radialement par un manchon coulissant de manière à s'engager dans une dépression annulaire de l'élément mâle, ce manchon étant lui-même immobilisé axialement par une seconde série de billes actionnées par la bague de manœuvre lorsque le boisseau est à la position ouverte. La fonction de sécurité est bien remplie, mais au prix d'une complication notable de la construction et d'une augmentation sensible du prix de revient.

Les perfectionnements qui font l'objet de la présente invention ont plus spécialement pour but de remédier à l'inconvénient précité et de permettre la réalisation d'un raccord-vanne de sécurité de construction simple et économique et de fonctionnement particulièrement fiable.

L'invention comporte un raccord-vanne de sécurité, du genre comprenant deux éléments emmanchables dont l'un renferme un boisseau tournant relié au mécanisme pour le verrouillage desdits éléments de façon à ce que ceux-ci ne puissent être dissociés alors que la vanne est en position ouverte, caractérisé en ce que le boisseau tournant présente une portée excentrée pour la commande d'un coulisseau agencé de manière à immobiliser le verrou à déplacement transversal qui, à la façon en soi connue, assure le blocage des deux éléments du dispositif à la position emmanchée.

Conformément à un mode de mise en œuvre préféré de la disposition qui précède, la portée excentrée d'actionnement est ménagée sur la partie du boisseau qui est destinée à porter la clef de manœuvre, tandis que le coulisseau, découpé d'une ouverture engagée sur la portée précitée, est guidé longitudinalement dans une dépression pratiquée dans la paroi extérieure de l'élément femelle du raccord-vanne, son extrémité libre étant propre à venir s'engager dans un logement prévu latéralement dans la partie de la pièce transversale ou verrou qui dépasse à l'extérieur dudit élément.

Le dessin annexé, donné à titre d'exemple, permettra de mieux comprendre l'invention, les caractéristiques qu'elle présente et les avantages qu'elle est susceptible de procurer:

Fig. 1 est une coupe axiale d'un raccord-vanne de sécurité établi conformément à l'invention.

Fig. 2 reproduit fig. 1, le boisseau ayant été supposé amené à la position fermée et les deux éléments du dispositif ayant été dissociés.

Fig. 3 et 4 sont des vues en plan à plus petite échelle montrant le coulisseau aux deux positions de fig. 1 et 2.

Fig. 5 est une coupe transversale suivant le plan indiqué en V–V en fig. 4.

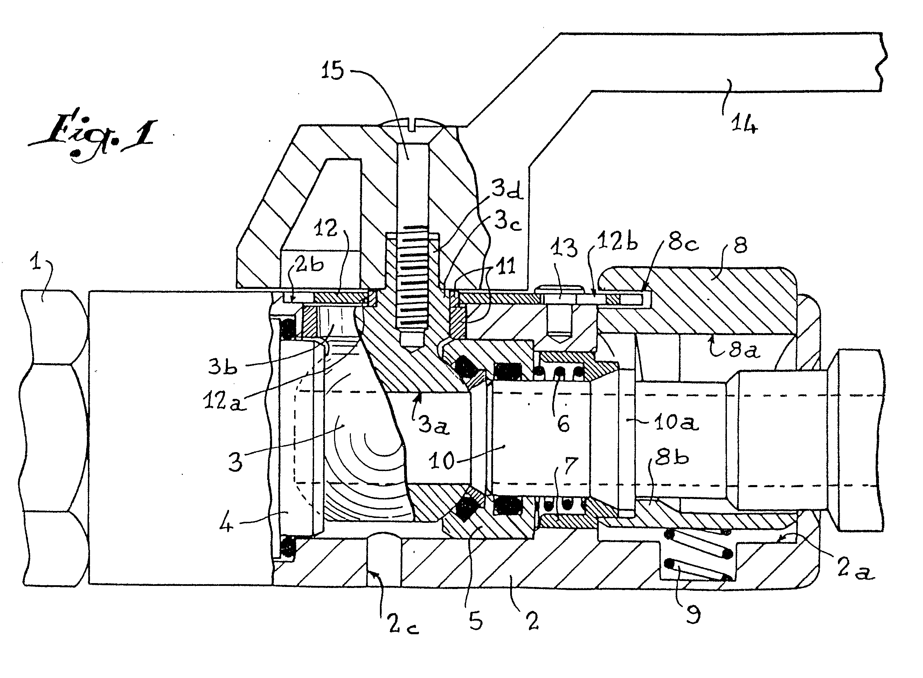

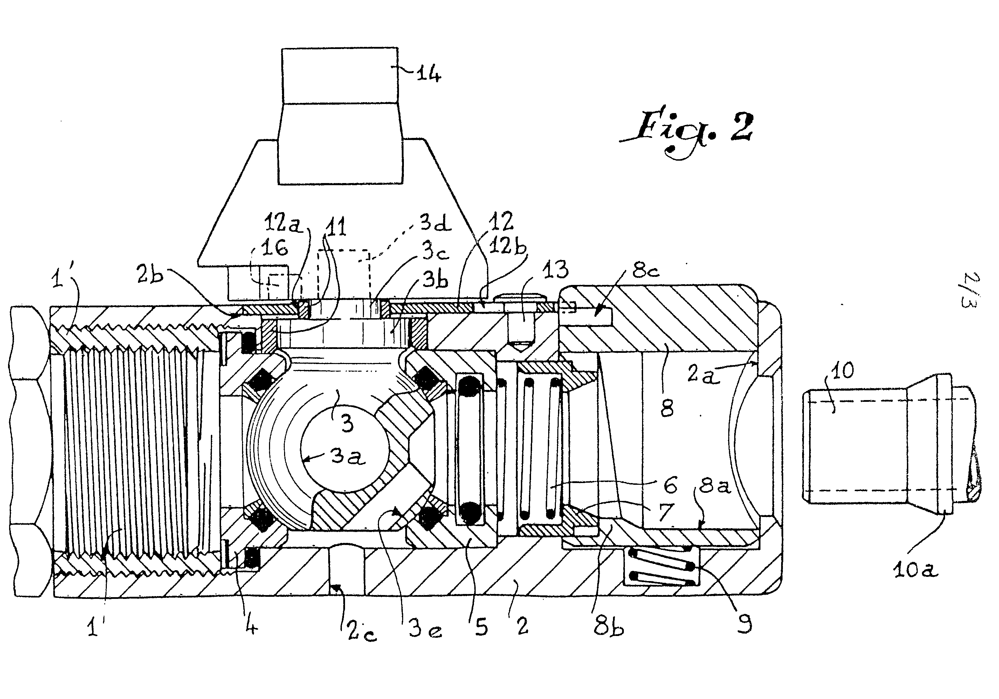

Le corps de l'élément femelle du raccord-vanne représenté en fig. 1 et 2 est constitué par l'assemblage de deux pièces creuses 1 et 2, vissées l'une dans l'autre avec interposition d'une fourrure 1'. A l'intérieur de la pièce principale 2 est monté un boisseau sphérique 3 percé d'un alésage débouchant $3\underline{a}$ et maintenu entre deux bagues porte-joint 4 et 5. Contre la bague 5 prend appui un ressort 6 qui tend à repousser un manchon 7 et à engager celui-ci à l'intérieur de l'ouverture $8\underline{a}$ d'un verrou cylindrique 8. A la façon en soi connue dans l'industrie des raccords, ce verrou 8 est mobile, sous l'effet ou à l'encontre d'un ressort 9, à l'intérieur d'un logement transversal $2\underline{a}$, à section circulaire, de la pièce 2 du corps 1–2; l'ouverture $8\underline{a}$ de ce verrou 8 présente une dent $8\underline{b}$ destinée à venir se disposer en arrière d'une collerette $10\underline{a}$ prévue sur l'embout 10 de l'élément mâle correspondant du raccord.

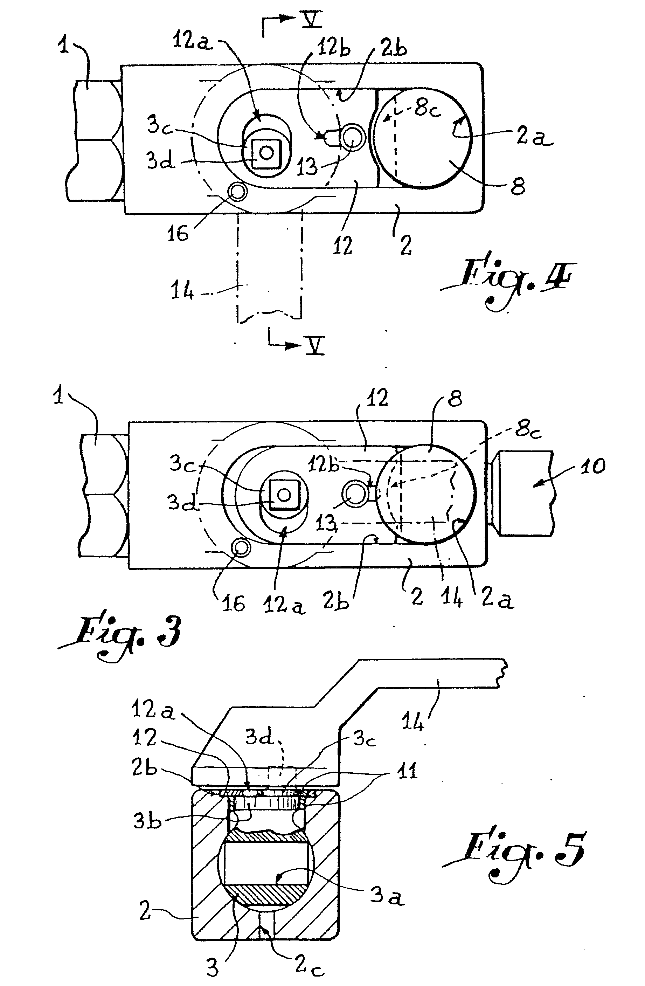

Le boisseau tournant 3 comporte vers le haut deux portées cylindriques superposées, à savoir une première $3\underline{b}$ qui assure le guidage de la rotation dudit boisseau dans la pièce 2 du corps 1–2 et une seconde $3\underline{c}$ qui est excentrée par rapport à la première et donc à l'axe transversal de pivotement du boisseau dans le corps 1–2. Chacune de ces portées $3\underline{b}$ et $3\underline{c}$ est équipée d'une garniture de friction ou douille 11 et la garniture de la portée supérieure ou bossage excentré $3\underline{c}$ est engagée dans une ouverture $12\underline{a}$ (fig. 3 et 4) ménagée dans un coulisseau 12; on notera que cette ouverture $12\underline{a}$ est allongée transversalement par rapport à l'axe du coulisseau, sa largeur étant égale à un très léger jeu près au diamètre du bossage excentré $3\underline{c}$. Ce coulisseau 12 est guidé dans une dépression longitudinale $2\underline{b}$ prévue dans la face supérieure de la pièce 2 du corps 1–2 et il est retenu dans cette dépression par un bouton 13 engagé dans une lumière axiale $12\underline{b}$ dudit coulisseau.

Au-dessus de la portée excentrée ou bossage $3\underline{c}$ le boisseau 3 se prolonge par un carré $3\underline{d}$ sur lequel est calé une clef de manœuvre ou levier 14. Ce levier 14 est fixé en place à l'aide d'une vis axiale 15 (fig. 1) et sa base coopère avec une goupille 16 (fig. 2 à 4) qui limite le déplacement angulaire dudit levier et du boisseau à une valeur de 90°. Le fonctionnement et l'utilisation du raccord-vanne décrit ressortent des explications qui précèdent et se comprennent aisément.

En fig. 2, 4 et 5 le dispositif est représenté à la position de fermeture, l'alésage 3a du boisseau 3 et le levier 14 étant orientés transversalement par rapport à l'axe de l'élément femelle. On notera que le manchon intérieur 7 se trouve, de par l'action du ressort, en position avancée pour laquelle son bord antérieur bute contre la dent 8b du verrou 8; ce manchon 7 est établi à deux diamètres extérieurs et à la position avancée sa partie à plus grand diamètre s'oppose à tout déplacement transversal du verrou 8. Comme par ailleurs l'extrémité libre, à profil arrondi, du coulisseau 12 bute contre la partie dépassante du verrou 8, ledit coulisseau est immobilisé axialement, si bien qu'il interdit la manœuvre du levier 14 puisque cette manœuvre, par suite de l'engagement de la portée excentrée 3c dans l'ouverture 12a, provoquerait le mouvement axial du coulisseau. Le raccordvanne ne peut donc en aucun cas et même si l'utilisateur tente d'actionner le verrou 8, être amené en position d'ouverture alors que l'élément mâle n'est pas introduit dans l'élément femelle.

En fig. 1 et 3 cet élément mâle a été mis en place dans l'élément femelle. La face oblique de la collerette 10a de l'embout 10 a repoussé le manchon 7 à l'encontre du ressort 6, si bien que le verrou 8 ainsi libéré a pu après passage de ladite collerette 10a se déplacer vers le haut sous l'effet de son ressort 9 et que la dent 8b est venue s'enclencher en avant de la collerette précitée, en verrouillant ainsi les deux éléments du raccord-vanne. Il convient d'observer qu'à cette position du verrou 8 le bord libre du coulisseau 12 se trouve disposé en vis-à-vis d'une entaille 8c pratiquée transversalement dans ledit verrou, de telle sorte que ce coulisseau est ainsi libre de se déplacer vers l'avant sous l'effet de la rotation impartie par l'utilisateur au levier 14. Ce dernier peut en conséquence être amené à la position d'ouverture du boisseau 3 pour laquelle l'alésage 3a et le levier sont orientés suivant l'axe du corps 1–2; par contre la manœuvre du verrou 8 en vue de la dissociation éventuelle des deux éléments est rendue impossible par suite de l'action de blocage exercée par le coulisseau 12 sur ledit verrou.

Pour dissocier les deux éléments à partir de la position ouverte de fig. 1 et 3, il faut en premier lieu que l'utilisateur ramène le levier 14 et le boisseau 3 à la position de fermeture suivant fig. 2, 4 et 5. Ce faisant la canalisation associée à l'élément mâle est mise en communication avec l'extérieur à travers un canal oblique 3e du boisseau 3 et un évent 2c de la pièce 2, ce qui assure la décompression de la canalisation précitée, à la façon en soi connue. Le verrou 8 peut être abaissé puisqu'il se trouve à la position haute suivant fig. 1, si bien que l'élément mâle est susceptible d'être retiré axialement de l'élément femelle et qu'on se retrouve alors à la position suivant fig. 2.

La sécurité de fonctionnement et d'utilisation est totale du fait que les deux éléments ne peuvent être séparés avant fermeture de la vanne et qu'il est impossible d'amener celle-ci à la position d'ouverture alors que lesdits éléments ne sont pas emmanchés. La construction est simple et économique, et donne ainsi lieu à une fiabilité parfaite. Il doit d'ailleurs être entendu que la description qui précède n'a été donnée qu'à titre d'exemple et qu'elle ne limite nullement le domaine de l'invention dont on ne sortiait pas en remplaçant les détails d'exécution décrits par tous autres équivalents.

**Revendications**

1. Raccord-vanne de sécurité, du genre comprenant deux éléments emmanchables (2, 10) dont l'un (2) renferme un boisseau tournant (3) relié au mécanisme (8) pour le verrouillage desdits éléments de façon à ce que ceux-ci ne puissent être dissociés alors que la vanne est en position ouverte, caractérisé en ce que le boisseau tournant (3) présente une portée excentrée (3c) pour la commande d'un coulisseau (12) agencé de manière à immobiliser le verrou à déplacement transversal (8) qui, à la façon en soi connue, assure le blocage des deux éléments du dispositif à la position emmanchée.

2. Raccord-vanne suivant la revendication 1, caractérisé en ce que la portée excentrée est constituée par un bossage (3c) prévu entre le carré (3d) qui porte la clef de manœuvre (14) et la partie cylindrique (3b) qui assure le guidage rotatif du boisseau.

3. Raccord-vanne suivant la revendication 2, caractérisé en ce que le coulisseau (12), guidé axialement dans une dépression longitudinale (2b) de la paroi extérieure femelle (1–2) renfermant le boisseau (3), est découpé d'un ouverture (12a) à profil allongé transversalement dans laquelle est engagé le bossage excentré d'actionnement (3c), et d'une lumière de coulissement (12b) traversée par un bouton (13) solidaire du corps (1–2) dudit élément femelle.

4. Raccord-vanne suivant l'une quelconque des revendications 2 et 3, caractérisé en ce que la partie du verrou (8) qui dépasse sur la paroi extérieure de l'élément femelle est découpée d'une entaille (8c) formant logement pour le bord libre du coulisseau, lequel s'oppose ainsi à l'actionnement dudit verrou lorsque le boisseau (3) est à la position ouverte.

5. Raccord-vanne suivant l'une quelconque des revendications 2 à 4, caractérisé en ce que le corps (1–2) de l'élément femelle renferme, en avant du boisseau (3), un manchon (7) sollicité par un ressort de rappel (6) qui tend à l'engager dans l'ouverture (8a) du verrou (8) lors du retrait de l'élément mâle, en assurant de la sorte l'immobilisation de ce verrou et, à travers le coulisseau (12) et le bossage excentré (3c) du boisseau (3), le blocage de ce dernier et de sa clef de manœuvre (14) lorsque les deux éléments ont été séparés.

**Patentansprüche**

1. Verbindungsteil mit Sicherheitsventil der Art, welches zwei ineinander einsteckbare Elemente (2, 10) umfasst, von denen eines (2) einen drehbaren Hahnkegel (3) enthält, welcher mit dem Mechanismus (8) zum Verriegeln der Elemente derart verbunden ist, dass diese nicht voneinander getrennt werden können, wenn sich das Ventil in seiner geöffneten Stellung befindet, dadurch gekennzeichnet, dass der drehbare Hahnkegel (3) einen exzentrischen Sitz (3c) zur Steuerung eines Schiebers (12) aufweist, welcher derart ausgebildet ist, dass er den Riegel (8) gegenüber einer Querbewegung festhält, welcher in an und für sich bekannter Weise die Sperrung der zwei Elemente der Vorrichtung in der eingesteckten Stellung sicherstellt.

2. Verbindungsteil mit Sicherheitsventil nach Anspruch 1, dadurch gekennzeichnet, dass der exzentrische Sitz von einem Vorsprung (3c) gebildet ist, welcher zwischen dem Quadrat (3d), welches den Handhebel (14) trägt, und dem zylindrischen Teil (3b) vorgesehen ist, welches die Drehführung des Hahnkegels sicherstellt.

3. Verbindungsteil mit Sicherheitsventil nach Anspruch 2, dadurch gekennzeichnet, dass in dem Schieber (12), welcher in Axialrichtung in einer länglichen Ausnehmung (2b) der Aussenwand des den Hahnkegel (3) enthaltenden weiblichen Elementes (1–2) geführt ist, eine Öffnung (12a) mit einem länglichen Profil, in welche quer der exzentrische Betätigungsvorsprung (3c) eingreift, und eine Schiebeöffnung (12b) ausgebildet sind, durch welche sich ein Knopf (13) erstreckt, der an dem Körper des weiblichen Teils (1–2) befestigt ist.

4. Verbindungsteil mit Sicherheitsventil nach einem der Ansprüche 2 oder 3, dadurch gekennzeichnet, dass in dem Abschnitt des Riegels (8), welcher über die Aussenwand des weiblichen Teils hinausgeht, ein Einschnitt (8c) eingeschnitten ist, welcher eine Aufnahme für den freien Rand des Schiebers bildet, welcher sich einer Betätigung des Riegels entgegensetzt, wenn sich der Sitz (3) in der Offenstellung befindet.

5. Verbindungsteil mit Sicherheitsventil nach einem der Ansprüche 2 bis 4, dadurch gekennzeichnet, dass der Körper (1–2) des weiblichen Teils vor dem Hahnkegel (3) eine Hülse (7) enthält, die mit einer Spannfeder (6) vorbelastet ist, welche bestrebt ist, die Hülse (7) in Eingriff mit der Öffnung (8a) des Riegels (8) beim Herausziehen des männlichen Elementes zu bringen, wodurch auf diese Weise die Sperrung des Riegels und über den Schieber (12) und den exzentrischen Sitz (3c) des Hahnkegels (3) die Sperrung letzteren und seines Handhebels (14) sichergestellt ist, wenn die zwei Elemente getrennt worden sind.

**Claims**

1. A safety sluice-coupling, of the type comprising two connectable elements (2, 10) one of which (2) contains a rotary dome (3) connected to a mechanism (8) for the locking of the said elements so that the latter cannot become dissociated when the sluice is in open position, characterized in that the rotary dome (3) has an eccentric bearing (3c) to move a slider (12) so arranged as to immobilise the transverely displaceable bolt (8) which, in the manner known per se, ensures the locking of the two elements of the device in the coupled position.

2. A sluice-coupling according to Claim 1, characterized in that the eccentric bearing is constituted by a boss (3c) provided between a shaped portion (3d), which supports the operating key (14), and a cylindrically shaped portion (3b) which ensures the rotary guiding of the dome.

3. A sluice-coupling according to Claim 2, characterized in that the slider (12) is guided axially in a longitudinal depression (2b) on the exterior female wall (1–22) containing the dome (3), the slider being cut by an opening (12a) of transverely elongated profile, in which the eccentric actuating boss (3c) is engaged, and by a sliding hole (12b) traversed by a button (13) integral with the body (1–2) of the said female element.

4. A sluice-coupling according to any one of Claims 2 and 3, characterized in that the part of the bolt (8) which extends over the exterior wall of the female element is cut by a slot (8c) forming a housing for the free edge of the slider, which thus opposes the actuation of the said bolt when the dome (3) is in the open position.

5. A sluice-coupling according to any one of Claims 2 to 4, characterized in that the body (1–2) of the female element contains at the front of the dome (3) a sleeve (7) on which a drawback spring (6) acts tending to engage it in the opening (8a) of the bolt (8) on the withdrawal of the male element, thus ensuring the immobilisation of this bolt and, through the slider (12) and the eccentric boss (3c) of the dome (3), the locking of the latter and of its operating key (14) when the two elements have been separated.

Fig. 1

Fig. 2

Fig. 4

Fig. 3

Fig. 5

9